# EUROPEAN PATENT APPLICATION

(11) **EP 4 756 219 A1**
(43) Date of publication of application: **10.06.2026**
(21) Application number: 24383337.3
(22) Date of filing: 06.12.2024
(51) Int. Cl.: F03D 80/50, F03D 80/70

(54) **WIND TURBINE DRIVE TRAIN**

(71) Applicant: Siemens Gamesa Renewable Energy Innovation & Technology S.L., 31621 Sarriguren (Navarra) (ES)
(72) Inventor: Rogg, Andreas, 25469 Halstenbek (DE)
(74) Representative: SGRE-Association

(57) **Abstract**

The invention describes a wind turbine drive train (7) for transmitting torque from a wind rotor (4) to a generator (9) comprising a rotor shaft (6) supported in a rotor front bearing (25) and a rotor rear bearing (26). The rotor front bearing (25) and the rotor rear bearing (26) are pretensioned against each other. A gearbox (8) is connected to the rotor shaft (6), and a gearbox support (31) fixed to a gearbox housing (30). The gearbox support (31) is configured to be connected to pretension means (42) configured to pretension the rotor shaft (6) in an axial direction of the rotor shaft (6) .

The invention further describes a wind turbine for use in reinstating preload in a bearing of such a wind turbine drive rain (7); and a method of reinstating a preload force in a bearing of a wind turbine drive train (7).

## Description

### Background

In an established type of wind turbine drive train, the low-speed shaft or main shaft is turned by the aerodynamic rotor, and connected to the drive end of a gearbox. A main bearing unit supports the low-speed shaft by a pair of tapered roller bearings, one of which is installed at the front or drive end of the shaft, and the other is installed at the rear or nondrive end of the shaft. The rotor bearings can be held in place by means of a housing or by separate pillow blocks mounted on a frame or housing.

The rotor bearings are generally preloaded, since failure-free operation of such bearings requires that a minimum preload is maintained over the lifetime of the wind turbine. In the existing configurations, the rotor bearing lifetime would typically exceed the service life of the wind turbine, so that it has not been necessary to provide maintenance procedures for exchanging the main bearing unit or reinstating the bearing preload. Instead, the established practice has been to engineer the rotor bearing unit according to the expected service life of the corresponding wind turbine.

However, the service life of present-day wind turbines has been extended significantly, from 20 years (older wind turbines) to 25 - 35 years (modern wind turbines), and it is desirable that major components such as the rotor bearing unit should have a corresponding extended service life or "fatigue life".

It is known to preload a wind turbine rotor bearing unit during assembly to a level that includes margins for assembly tolerance, measurement tolerance, settlement, creep, wear, and relaxation over the bearing's estimated service life. Since these margins are chosen to cover rarely occurring worst case situations, even a conservative preload level is already quite large, and a significant share of the fatigue damage that limits the service life arises from bearing preload. However, it is generally not possible to extend the service life of a rotor bearing unit by lowering the initial preload level with the aim of mitigating fatigue from preload, since insufficient preload leads to other types of wear that unavoidably result in premature fatigue damage.

Therefore, the longer service life of a wind turbine leads to problems with the rotor bearing unit, since the bearing preload levels, which make it possible to avoid service issues during a "short" wind turbine service life (ca. 20 years), cannot be decreased to extend the bearing service life to match a "long" wind turbine service life (e.g. 25 - 35 years) .

One way of increasing the fatigue or service lifetime of a rotor bearing is to make it larger, i.e. by increasing the overall dimensions of the rollers, races, bearing housing, etc. However, the cost of engineering the rotor bearing unit to the longer service life of a modern wind turbine adds significantly to the cost of the wind turbine.

It is therefore an object of the invention to provide a drive train that overcomes the problems outlined above.

This object is achieved by the claimed drive train, by the claimed wind turbine, and by the claimed method of reinstating a preload in the rotor bearings of a wind turbine.

### Description

According to the invention, the wind turbine drive train for transmitting torque from a wind rotor to a generator comprises a support frame, a rotor shaft extending in an axial direction and supported in a rotor front bearing and a rotor rear bearing. The rotor shaft is configured to rotate relative to the support frame. There are different possibilities known in the state of the art to design the support frame. In one embodiment, the support frame is designed as a bearing housing in which both rotor bearings are mounted. The base shape of such a bearing housing might be a tube with a diameter in the same order of magnitude as the rotor bearings. In another embodiment, the rotor bearings are mounted in separated pillow blocks and these pillow blocks are connected by the support frame. In this embodiment, the support frame can be a part of the main frame or even be the main frame. In another embodiment, both rotor bearings are mounted in a joint rotor bearing housing and this rotor bearing housing is attached to the support frame. Also in this preferred embodiment, the support frame can be a part of the main frame or even be the main frame. The rotor front bearing and the rotor rear bearing are preloaded or pretensioned against each other. Preferably, the rotor front bearing and the rotor rear bearing are tapered roller bearings, as this bearing type allows to carry high specific loads. The wind turbine drive train further comprises a gearbox connected to the rotor shaft and a gearbox support fixed to a gearbox housing. The gearbox support is configured to be connected to pretension means. There are different possibilities known in the state of the art to design the gearbox support. In one embodiment, the gearbox support is realized in the form of torque arms connected to the gearbox housing. In many embodiments, two torque arms on both sides of the gearbox are connected to the support frame or to a main frame. The connection may be via elastic elements to reduce noise emission and to allow for some flexibility to compensate for manufacturing tolerances and alignment problems. In other embodiments, more than two torque arms are foreseen as gearbox support. In other known embodiments, the gearbox support is realized as a flange connected to the gearbox housing. This flange may be connected to the support frame, either directly or via elastic elements. In other embodiments, the gearbox support can be designed exclusively to connect pretension means. In this embodiment, the gearbox support may not have a function during normal power production operation of the wind turbine drive train.

The pretension means are configured to pretension the rotor shaft in an axial direction of the rotor shaft.

An advantage of the inventive wind turbine drive train is that rotor bearing preload can be reinstated in a straightforward procedure at any time during the service life of the wind turbine, so that the rotor bearings can be incorporated in the drive train of a wind turbine with an extended service life. Designing the gearbox support in a way that pretension means are connectable is a very limited design change. The structural modifications to arrive at the inventive wind turbine drive train are significantly less expensive than engineering the rotor bearing unit to include larger bearings. Additionally, it is in usual drive train configurations much easier to connect pretension means to the gearbox support than to other parts of the drive train like rotor shaft, rotor bearings or the like. The idea to transmit a pretension in axial direction via the gearbox to the rotor shaft simplifies the reinstatement of the preload of the rotor bearings significantly.

Furthermore, there is no need to set an excessive preload during manufacture of the drive train for installation in a wind turbine with an extended lifetime. It follows that the inventive wind turbine drive train does not suffer from accumulated bearing fatigue damage resulting from excessive preload.

Another aspect of the invention relates to a wind turbine comprising a wind turbine drive train.

Another aspect of the invention relates to a method of reinstating a preload in the rotor bearing of a wind turbine drive train comprising a rotor shaft with a rotor front bearing, a rotor rear bearing and a gearbox connected to a rotor shaft, comprising the steps of providing pretension means connected to a gearbox support, providing a pretension in an axial direction of the rotor shaft by activating the pretension means, adjusting an axial fixation means of one of the rotor bearings, and relaxing the pretension by deactivating the pretension means. Deactivating the pretension means means that at least a major part of the pretension in the gearbox in the axial direction of the rotor shaft is relaxed.

While the procedure of reinstating the rotor bearing preload is particularly advantageous when performed in an already operational drive train, the procedure can of course be used to set the initial bearing preload for rotor bearing unit during the drive train assembly stage. In the following, any description of a preload reinstatement procedure during the service life of the bearing may be assumed to apply also to an initial preload setting procedure during drive train assembly.

The pretension means can be any kind of linear actuator capable of exerting an axial force against the gearbox support to push it in axial direction, which means parallel to the rotor shaft axis. In a particularly preferred embodiment of the invention, the pretension means comprise a hydraulic cylinder of a hydraulic circuit. The hydraulic cylinder comprises a piston which extends to apply an axial force against the gearbox support. The hydraulic circuit shall be understood to comprise the usual components such as a motor-driven pump, a fluid tank, a fluid reservoir, and an arrangement of valves to control fluid flow through the hoses and cylinder.

Particularly advantageous embodiments and features of the invention are given by the dependent claims, as revealed in the following description. Features of different claim categories may be combined as appropriate to give further embodiments not described herein.

In a preferred embodiment of the invention, the pretension means are arranged between the support frame and the gearbox support and are configured to provide a pretension between the support frame and the gearbox support in the axial direction of the rotor shaft wherein the pretension is transmitted via a gearbox bearing to the rotor shaft. By arranging the pretension means between the support frame and the gearbox support, advantageously the pretension is generated on the most direct way. Transmitting the axial pretension via a gearbox bearing to the rotor shaft is the most direct way to direct the axial pretension in the rotor shaft. The transfer of the pretension to the rotor shaft may circumvent the gearbox bearing by transmitting the pretension via additional load carrying structure added in the load path between the gearbox support and the rotor shaft, but this load carrying structure needs to be dismounted for going back to normal power production mode of the drive train, what adds handling of additional parts and makes the solution more complicated.

Transmitting the pretension from the pretension means via the support structure, the gearbox support and the gearbox bearing is the simplest and most direct load path.

In a preferred embodiment of the invention, the wind turbine drive train is configured to receive adjustment means to adjust the position of the gearbox support relative to the support frame in a direction perpendicular to the axial direction of the rotor shaft. The easiest way for reinstating the preload in a rotor bearing is achieved when one of the rotor bearings reaches a completely unloaded state. To reach this state free of load, not only an axial preload needs to be compensated, but also all kind of lateral forces on the rotor bearing, coming out of gravitational loads, wind loads, etc. need to be compensated for. The inventor has recognized that these lateral forces can easily be compensated by adding adjustment means to the drive train to adjust the position of the gearbox support relative to the support frame. This allows to slightly change the axial direction of the rotor shaft which allows to unload one of the rotor bearings completely if done carefully and in the right direction. If the rotor bearing is completely free of load, its axial position can be adjusted smoothly what advantageously allows for readjusting the axial preload in the rotor bearings.

In a preferred embodiment of the invention, the pretension means and the adjustment means are configured to be controlled to reach a pretension state in which one of the rotor bearings, in particular the rotor rear bearing, is free of load. As explained, the pretension state free of load for one of the rotor bearings requires an exact orientation of the rotor shaft axis and an accurate dosing of the forces introduced in the drive train by the pretension means and the adjusting means. Configuring the pretension means and the adjustment means to be controlled independently and with great exactitude to reach a pretension state free of load for one of the rotor bearings advantageously allows for a fast unloading of the rotor bearing. Depending on the load generation principle of the pretension means and the adjustment means, this can be achieved e.g. for hydraulic systems by high precision in adjusting the hydraulic pressure in the pistons and near to zero leakage in the system as any drop of pressure would require a new controlled adjustment for reaching the unloaded state of the rotor bearing. In case of mechanical linear actuators, e.g. spindles or jackscrews, low friction surfaces and high precision adjustment tools will allow for the needed accuracy. Preferably, the free of load state is achieved for the rotor rear bearing by applying a pretension force from the gearbox to the rotor shaft. Alternatively, a push force is applied from the gearbox to the rotor shaft, allowing for the rotor front bearing a free of load state. As this latter possibility is more difficult to realize, especially in respect of compensating the lateral forces acting on the rotor front bearing, the free of load state for the rotor rear bearing is the simpler and more preferred solution.

In a preferred embodiment of the invention, the rotor shaft is suited to be rotated by turning means during the activation and deactivation of the pretension means. Activating the pretension means means that a force is generated by the pretension means to change the preload state of the rotor bearings. In case of a hydraulic system this is achieved by putting a piston under fluid pressure, in case of a spindle or jackscrew, this is achieved by generating the force by turning the spindle or jackscrew which requires applying a torque to turn them. Deactivating the pretension means means to relax the pretension means that the major part of the exerted force for the pretension is taken away. That will usually be achieved by reducing the hydraulic pressure in the example of a hydraulic system or turning back the spindle or jackscrew in a relaxed position. Rotating the rotor shaft by turning means during the activation and deactivation of the pretension means advantageously avoids the risk of uneven load distributions in the rotor bearings. Adjusting the preload in rotor bearings in standstill always contains the risk of overloading single rollers if the load distribution is not 100% symmetric, what is nearly impossible to reach as the lateral forces in the rotor bearings are difficult to compensate perfectly. By rotating the rotor shaft during the activation and deactivation of the pretension means, this risk is drastically reduced. Turning means allowing the rotation of the rotor shaft can be the wind turbine generator itself if the electric configuration of the drive train allows for operation in the motor mode of the generator. Alternatively, it can be any kind of auxiliary turn drive of a wind turbine drive train, either permanently installed in the drive train or temporarily installed as a service tool.Various embodiments of such turn drives are known in the prior art. The wind rotor itself is not an appropriate turning means as it cannot be controlled precisely enough to allow for the required slow rotation of the rotor shaft.

In a preferred embodiment of the invention, the drive train comprises further adjustable axial fixation means for the rotor front bearing and/or for the rotor rear bearing. As explained above, the easiest way to reinstate a preload in a rotor bearing is to reach a pretension state in which one of the rotor bearings is free of load. In this state, it is relatively easy to adjust the axial position of the rotor bearing in a way that the intended preload will act on the bearing after relaxation of the pretension means. To allow for an exact axial positioning of the bearing, adjustable axial fixation means are provided for at least one of the rotor bearings, which advantageously allow for an exact axial positioning and fixation of the rotor bearing.

In a preferred embodiment of the invention, the adjustable axial fixation means include at least one of shims, a rotor shaft nut or a threaded ring, fluid channels in a rotor bearing housing or in the rotor shaft adapted to be pressurized, a preload ring, an axial displacement means or an adjusted bearing cover plate.

There are many possibilities to design the adjustable axial fixation means. Each of the rotor front bearing and the rotor rear bearing usually has an inner and an outer bearing ring. Only one of these four bearing rings needs to be adjustable in axial direction to reinstate the bearing preload, but of course it is not excluded that more than one bearing ring comprises adjustable axial fixation means. Depending on the available space and the accessibility in the specific drive train design, each solution offers specific advantages. A simple and cheap solution are shims of different thicknesses, which might be exchanged or added or taken out to vary the distance between the bearing ring and a given axial shoulder on the rotor shaft or the bearing housing. A rotor shaft nut or a threaded ring in the bearing housing are known solutions not only to adjust the axial preload but also to provide means for a save axial fixation.

Another proven technology for providing an axially adjustable fixation for a rotor bearing ring on a shaft or in the bearing housing is a press fit. To reduce the friction in such a press fit to allow for adjustment, providing fluid channels in the rotor shaft or in the bearing housing which can be filled with pressurized oil or compressed air are known technologies in the state of the art. In this way, a fluid cushion can be provided in the press fit connection allowing for easy adjustment of the axial position of the rotor bearing ring. A preload ring and or axial displacement means are helpful devices allowing the precise axial adjustment of rotor bearing rings. Preload rings which are connected with a press fit to the rotor shaft or the rotor bearing housing may provide a reliable axial shoulder for fixing the rotor bearing ring in axial direction. The axial displacement means, which might be adjusted hydraulically, pneumatically or by mechanical means like threads or spindles may provide precise control of the axial position of a preload ring or directly of a rotor bearing ring.

An adjusted bearing cover plate is another preferred embodiment for adjustable axial fixation means. Bearing cover plates are usually screwed firmly against the gearbox housing to cover the bearing. They may include an axial shoulder which supports or presses against a rotor bearing ring. If this axial shoulder is adjusted or the axial position of the whole bearing cover relative to the gearbox housing is adjusted, the axial position of the rotor bearing can be changed in an advantageously simple way.

In a preferred embodiment of the invention, the gearbox support is connected to the support frame during normal power production operation of the drive train. This configuration is advantageously a very simple solution, as the gearbox support carrying the gearbox in normal operation is used for connecting the pretension means. Preferably, the gearbox support is realized in the form of torque arms connected to the gearbox housing and connected with the support frame via elastic elements. This configuration advantageously allows for noise isolation between gearbox and support frame and in addition, the elastic mounting compensates for manufacturing tolerances.

In a preferred embodiment of the invention, the rotor front bearing and the rotor rear bearing are mounted in a joint rotor bearing housing and the rotor bearing housing is attached to the support frame. This configuration gives advantageously the best results with the method of reinstating the preload in the rotor bearing as mounting the two rotor bearings in a joint bearing housing reduces the risk of preload loss during reinstatement of the preload as only a minimum number of interfaces are included in the load path of the bearing preload and any additional interface increases the risk of preload loss.

The advantages discussed for the apparatus claims respectively apply also for the method claims.

In a preferred embodiment of the method of reinstating a preload, the method includes providing adjustment means and adjusting the position of the gearbox support in a direction perpendicular to the axial direction of the rotor shaft.

In a preferred embodiment of the method of reinstating a preload, the method includes controlling the pretension means and the adjustment means to reach a pretension state in which one of the rotor bearings, in particular the rotor rear bearing, is free of load and or checking that one of the rotor bearings is free of load before adjusting the axial fixation means of the rotor bearing. The latter can be done by demounting a rotor bearing cover and introducing a feeler gauge to measure if the rotor bearing gap between inner rotor bearing ring and outer rotor bearing ring or between the rollers and a rotor bearing ring is equal over the hole circumference of the rotor bearing. By checking, that the rotor bearing is free of load, before adjusting the axial fixation means, the safety for the service personal is advantageously improved, as the axial fixation means should only be demounted if the bearing is completely free of load.

As explained above, a suitably high initial bearing preload force is generally established during a final manufacturing stage of the main bearing unit. This bearing preload can gradually diminish over time. It is generally only necessary to reinstate the bearing preload if the preload force has decreased to a predetermined lower threshold, at which point the kinematics of the rollers are no longer ensured. Therefore, in a further preferred embodiment of the invention, the inventive method comprises a step of determining the actual rotor bearing preload before providing the pretension in the axial direction of the rotor shaft by the pretension means acting on the gearbox support. For example, the actual bearing preload force can be determined by measuring an elongation of the main shaft. Alternatively, or in addition, the actual bearing preload force can be determined from a measured radial displacement of the main shaft under predetermined loading conditions. Such methods to determine the rotor bearing preload are known in the state of the art.

In another preferred embodiment of the method of reinstating a preload, the method includes rotating the rotor shaft during the step of providing the pretension and/or rotating the rotor shaft during the step of releasing the pretension.

In another preferred embodiment of the method of reinstating a preload, the method includes providing a shim for adjusting the axial fixation of the rotor bearing and replacing the shim or changing the number of shims for adjusting the axial fixation of the rotor bearing and/or providing a shaft nut or a threaded ring and adjusting the position of the shaft nut or the threaded ring for adjusting the axial fixation means of the rotor bearing and/or providing a preload ring in contact with a bearing ring, and in particular providing axial displacement means acting on the preload ring for moving the bearing ring of the rotor bearing and/or providing fluid channels in a rotor bearing housing or in the rotor shaft adapted to be pressurized to reduce friction in a press fit of the bearing ring and/or adjusting a bearing cover plate

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a wind turbine;
Figure 2 shows a main bearing unit of a wind turbine drive train;
Figure 3 -8 show different steps of a method of reinstatement of a bearing preload of the wind turbine drive train;

In the diagrams, like numbers refer to like objects throughout. Objects in the diagrams are not necessarily drawn to scale.

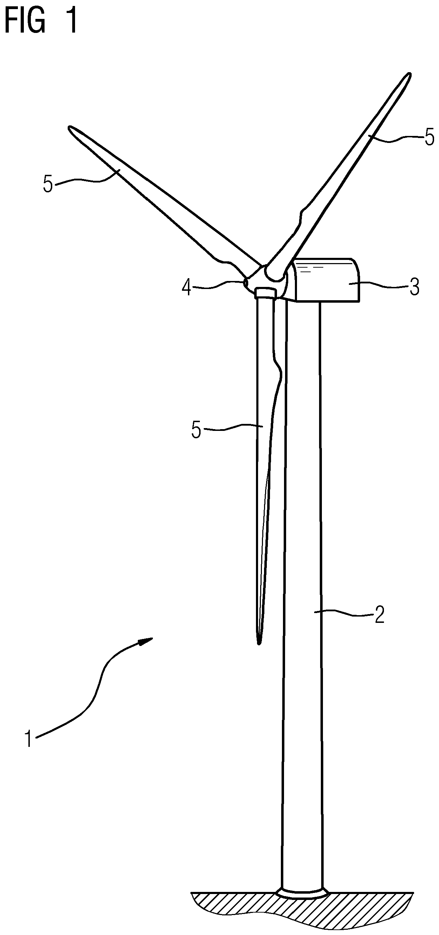

Figure 1 shows a wind turbine 1 with a tower 2 and a nacelle 3. Rotatably attached to the nacelle 3 is a wind rotor 4 with rotor blades 5. The inventive drive train 7 is placed inside the nacelle 3.

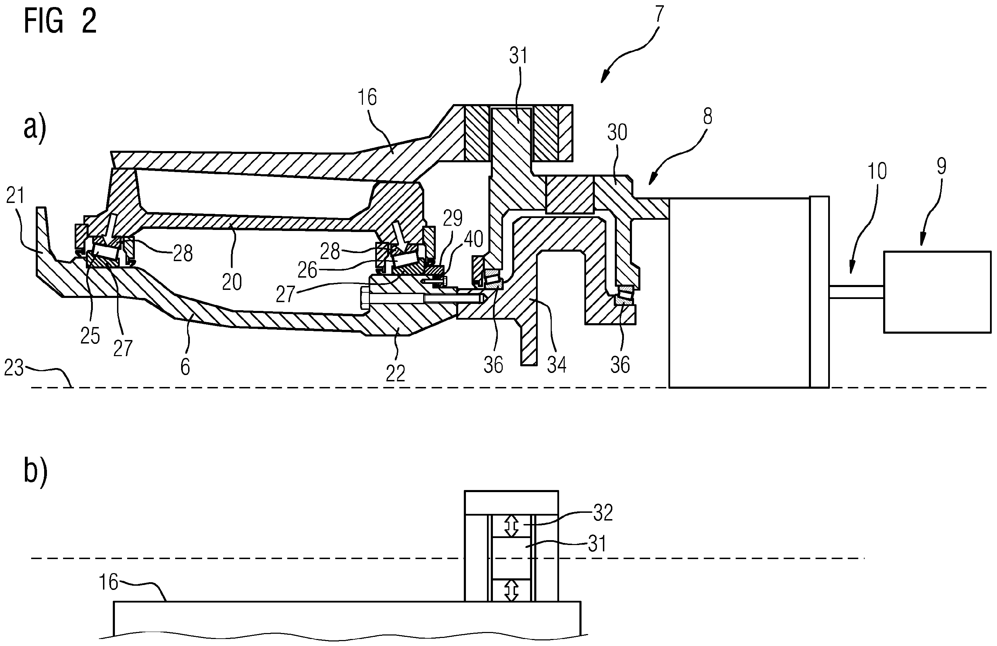

Figure 2a) shows a cross-section through part of a wind turbine drive train 7 in the normal operational configuration for power production of the wind turbine.

The torque generated by the wind rotor 4 (not shown) is transmitted via the rotor shaft 6 to the gearbox 8 comprising a planet stage with a planet carrier 34. The rotor shaft 6 which rotates around its rotor shaft axis 23 is coupled via the hub flange 21 to the wind rotor 4 and via the gearbox flange 22 to the planet carrier 34 of the gearbox 8. The rotor shaft 6 is rotatably supported in the rotor front bearing 25 and the rotor rear bearing 26. In the normal operating state shown in Fig. 2, both rotor bearings 25, 26 are pretensioned against each other as indicated by the arrows at the rotor bearings 25, 26. In the shown embodiment, the rotor bearings 25, 26 are mounted in the rotor bearing housing 20 which is attached to the support frame 16. In other embodiments, the rotor bearings 25, 26 are mounted in separate pillow blocks which are attached to the support frame 16. In all embodiments, the rotor shaft 6 is supported by the front bearing 25 and the rear bearing 26 and configured to rotate relative to the support frame 16. Each rotor bearing 25, 26 comprises tapered rollers arranged between an inner bearing ring 27 and an outer bearing ring 28. Various annular elements are provided about the main shaft 6 and the rotor bearing housing 20 for applying a preload to the rotor bearings 25, 26. The gearbox 8 comprises a gearbox housing 30 to which a gearbox support 31 is fixed. In the shown embodiment, the gearbox support 31 is connected to the support frame 16. In other embodiments, the gearbox 8 might be connected to the support frame 16 in other ways. The gearbox 8 is coupled via a high-speed shaft 10 with a generator 9. In the shown embodiment, the high-speed shaft 10 is offset relative to the rotor shaft axis 23. In other embodiments, the high-speed shaft 10 is coaxial to the rotor shaft axis 23.

In Fig. 2b), a side view of the gearbox support 31 on the support frame 16 is shown. In the shown embodiment, the gearbox support 31 is attached to the support frame 16 via elastic elements 32. The elastic elements 32 are carrying the vertical forces on the gearbox support 31, as indicated by the white arrows. In the shown embodiment, the vertical forces comprise mostly the weight of the gearbox 8 and the torque reaction forces, as the gearbox support 31 acts in the shown embodiment as torque arms for the gearbox 8. Preferably, in a method to reinstate the preload in a rotor bearing 25, 26, the actual pretension in the rotor bearings 25, 26 will be determined before providing the pretension in the axial direction of the rotor shaft 6 by the pretension means 42 as described in the following figures.

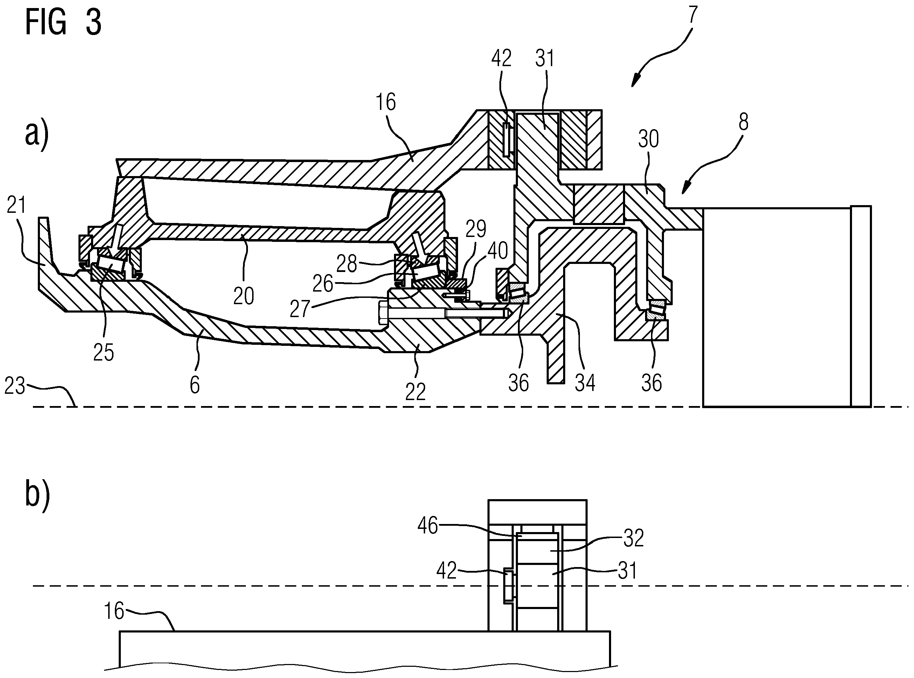

Fig. 3a) and b) show the first step of a method to reinstate the preload in a rotor bearing 25, 26 of the wind turbine drive train 7. The generator 9 has been omitted due to simplicity. Different to Fig 2, in Fig 3 pretension means 42 are provided which are connected to the gearbox support 31. These pretension means 42 are configured to pretension the rotor shaft 6 in an axial direction of the rotor shaft 6. In Fig. 3b) in addition to the pretension means 42 adjustment means 46 are provided which are attached to the drive train 7, allowing to adjust the position of the gearbox support 31 relative to the support frame 16 in a direction perpendicular to the axial direction of the rotor shaft 6.

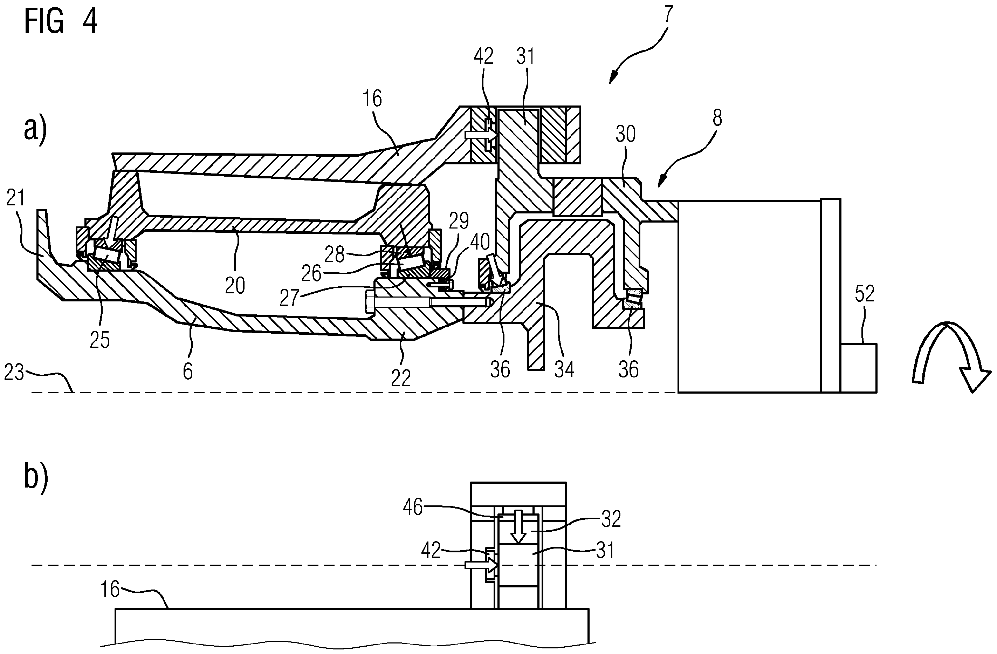

Fig. 4a) and b) show the next step of the method to reinstate the preload in a rotor bearing 25, 26.

The pretension means 42 which are arranged between the gearbox support 31 and the support frame 16 are actuated, as indicated by the white arrows in axial direction of the rotor shaft 6. By actuating the pretension means 42, an axial force acting on the gearbox support 31 is transmitted via the gearbox housing 30 and via the gearbox bearing 36 to the planet carrier 34, which moves slightly backwards, which means away from the rotor 4. As the planet carrier 34 is coupled via the flange 22 with the rotor shaft 6, the rotor shaft 6 is pretensioned in the axial direction. This leads to a (small) lengthening of the rotor shaft 6 and to a reduction of the preload in the rotor rear bearing 26, indicated by the black arrow on the rotor rear bearing 26. Preferably, the adjustment means 46 are actuated when the pretension means 42 are actuated, to adjust the position of the gearbox support 31 in a direction perpendicular to the axial direction of the rotor shaft 6. This allows to compensate e.g. for the vertical forces which are normally transmitted via the rotor rear bearing 26 due to the weight of the rotor 4. Preferably, during the activation and deactivation of the pretension means 42, the rotor shaft 6 is suited to be rotated by turning means 52, as indicated by the rounded arrow on the right side of Fig. 4a). This means that the rotor shaft 6 will be rotated by the turning means 52 when the pretension via the gearbox is provided or when the pretension is released.

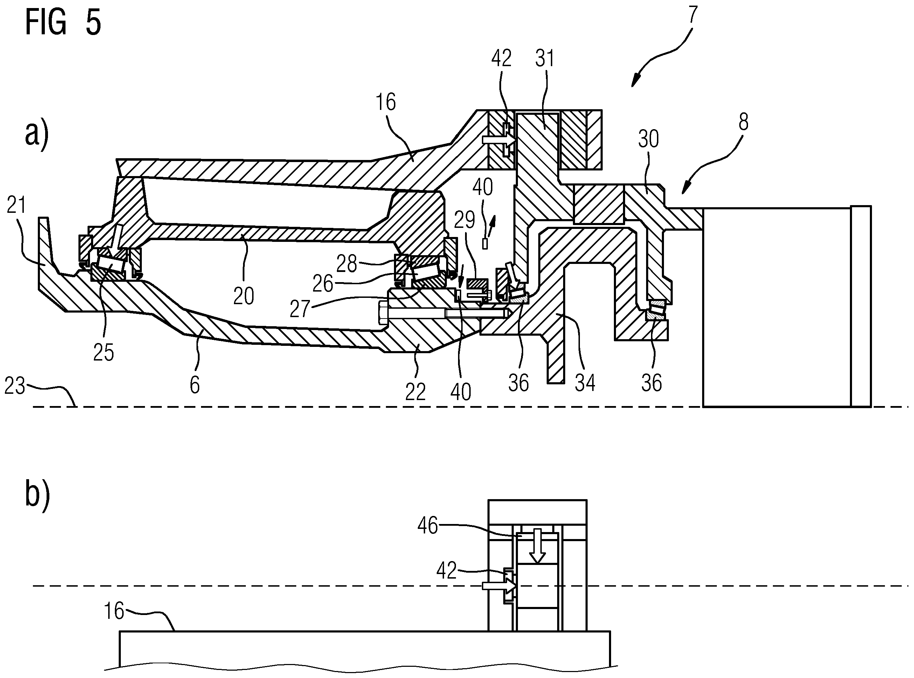

Fig. 5a) and b) show another step of the method to reinstate the preload in a rotor bearing 25, 26.

In this step the pretension means 42 and the adjustment means 46 are controlled to reach a pretension state in which one of the rotor bearings 25, 26 is free of load. In the shown preferred embodiment, this is shown for the rotor rear bearing 26 (no arrow left on the bearing). In practice, it has to be checked that the rotor bearing 26 is really free of load. This can be done by demounting a bearing cover and introducing a feeler gauge to measure if the bearing gap between inner bearing ring 27 and outer bearing ring 28 or between the rollers and a bearing ring 27, 28 is equal over the hole circumference of the rotor bearing 25, 26. If this is the case, the axial fixation means 29 acting on the inner bearing ring 27 of the rotor rear bearing 26 can be demounted as shown in the figure 5a)and a shim 40 or a combination of shims 40 can be replaced for adjusting the axial fixation means 29. Please note that the adjustment of the axial fixation means 29 shown in Figure 5 is just exemplarily and can be achieved by many different embodiments as defined in the patent claims. Only one of the four bearing rings 27, 28 of the two rotor bearings 25, 26 needs to be adjusted by axial fixation means 29 to reinstate the preload in the rotor bearing 25, 26.

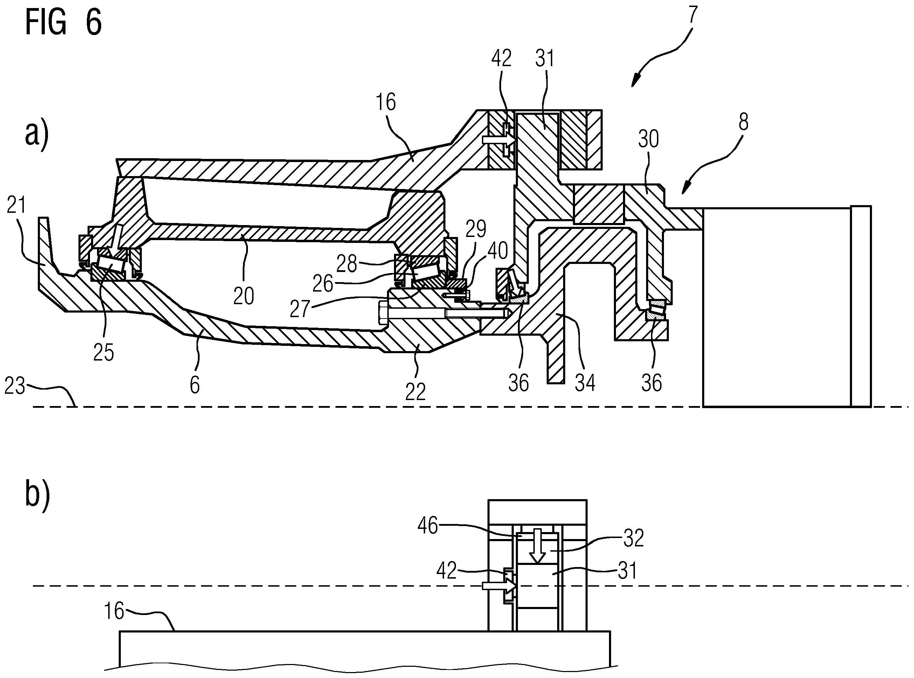

Fig. 6a) and b) show the next step of the method to reinstate the preload in a rotor bearing 25, 26.

The axial fixation means 29 are remounted with the new shim 40 or combination of new shims 40. By changing the thickness of the shims 40 the axial position of the inner bearing ring 27 is adjusted, leading to a change in the bearing preload after relaxing the pretension by deactivating the pretension means 42. In alternative embodiments of the invention, the adjustment of the axial fixation means 29 is achieved by other means than the shown shims 40, e.g. by providing rotor shaft nuts or threaded rings, by releasing a pressure fit between the bearing ring 27, 28 and the rotor bearing housing 20 by providing fluid channels in the rotor bearing housing 20 or the rotor shaft 6 adapted to be pressurized to release the pressure fit, by providing a preload ring acting directly or indirectly on one of the bearing rings 27, 28, by providing other kind of axial displacement means like hydraulic or pneumatic pistons or spindels which are in particular acting on a preload ring, or by adjusting a bearing cover plate. Bearing cover plates are well known in the state of the art, being an embodiment similar to the shown axial fixation means 29 where the axial fixation means 29 do have an extended size in diameter to act additionally as bearing cover plates.

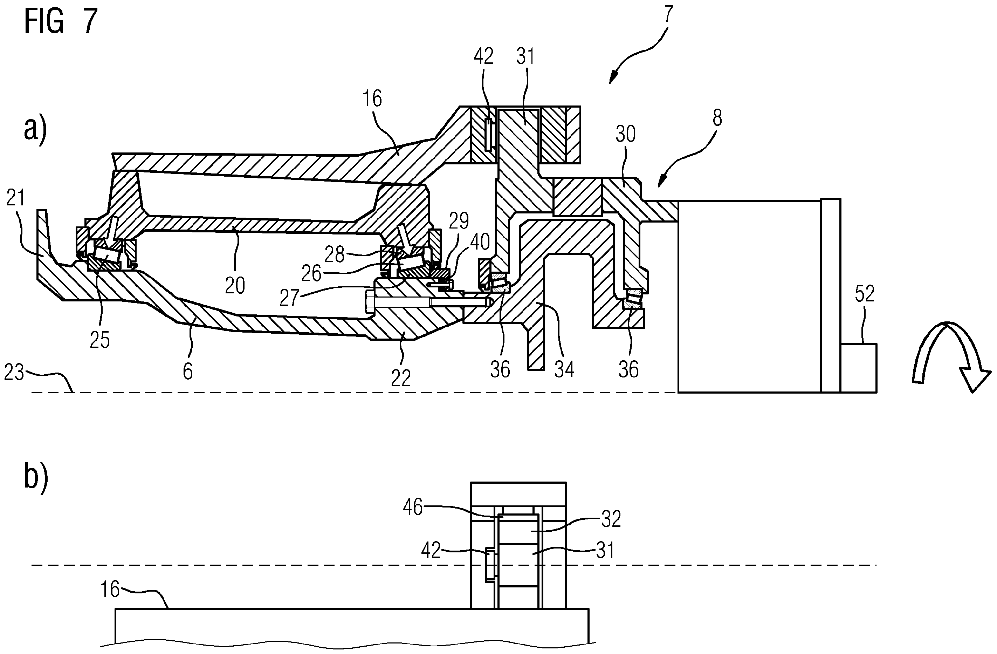

Fig. 7a) and b) show the next step of the method to reinstate the preload in a rotor bearing 25, 26. In this step, the deactivation of the pretension means 42 and adjustment means 46 is shown. Preferably, the rotor shaft 6 will be rotated during the release of pretension by deactivation of the pretension means 42. The rotation can be achieved by turning means 52. By relaxing the pretension means 42 and thus the pretension on the rotor shaft 6 introduced via the gearbox 8, the rotor rear bearing 26 gets again preloaded against the rotor front bearing 25, as intended for normal operation of the drive train 7 of the wind turbine 1.

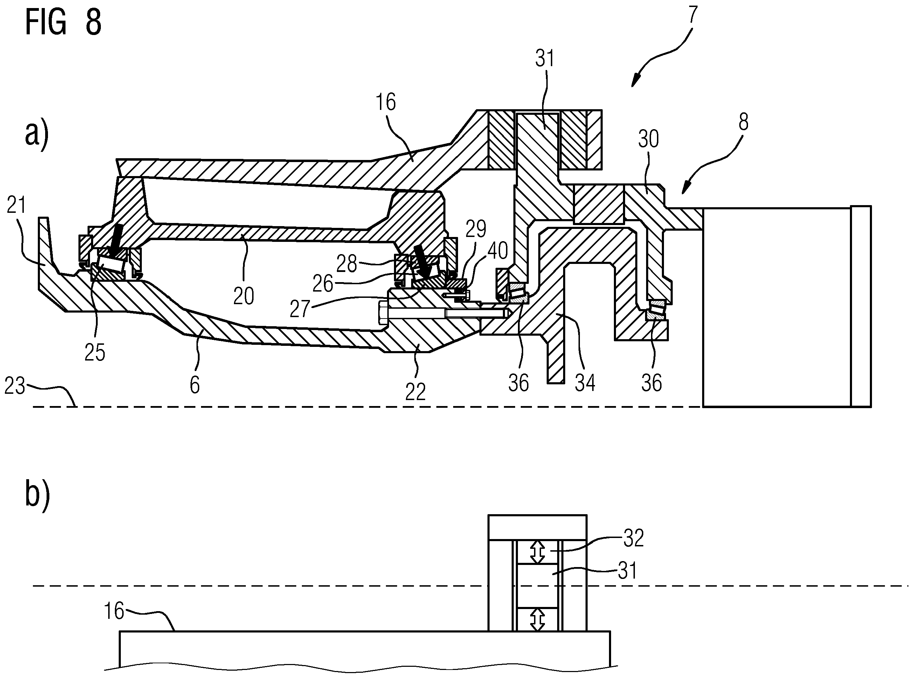

Fig. 8a) and b) show the next and last step of the method to reinstate the preload in a rotor bearing 25, 26. In this step, the pretension means 42 and the adjustment means 46 are demounted to bring the wind turbine drive train back in the normal operating state as shown in Fig. 2. But, as indicated by the black arrows in the rotor bearings 25, 26, due to the adjustment of the axial fixation means 29, the preload in the rotor bearings 25, 26 has changed compared to the situation in Fig. 2. Of course, it is recommended to check again the actual bearing preload as described above to verify if the reinstatement of the preload in the rotor bearings 25, 26 has been achieved as planned. Otherwise, all the steps from Fig. 3 to 8 have to be repeated until the desired bearing preload is provided.

### Reference list

- 1: Wind Turbine
- 2: Tower
- 3: Nacelle
- 4: Wind Rotor
- 5: Rotor Blade
- 6: Rotor Shaft
- 7: Drive Train
- 8: Gearbox
- 9: Generator
- 10: High-Speed Shaft

- 16: Support Frame
- 20: Rotor Bearing Housing
- 21: Hub Flange
- 22: Gearbox Flange
- 23: Rotor Shaft Axis
- 25: Rotor Front Bearing
- 26: Rotor Rear Bearing
- 27: Inner Bearing Ring
- 28: Outer Bearing Ring
- 29: Axial Fixation Means

- 30: Gearbox Housing
- 31: Gearbox Support
- 32: Elastic Element
- 34: Planet Carrier
- 36: Gearbox Bearing

- 40: Shim
- 42: Pretension Means
- 46: Adjustment Means

- 52: Turning Means

## Claims

1. A wind turbine drive train (7) for transmitting torque from a wind rotor (4) to a generator (9) comprising a support frame (16),
a rotor shaft (6) extending in an axial direction and supported in a rotor front bearing (25) and a rotor rear bearing (26)and configured to rotate relative to the support frame (16),
wherein the rotor front bearing (25) and the rotor rear bearing (26) are pretensioned against each other,
a gearbox (8) connected to the rotor shaft (6), and
a gearbox support (31) fixed to a gearbox housing (30),
wherein the gearbox support (31) is configured to be connected to the pretension means (42) configured to pretension the rotor shaft (6) in an axial direction of the rotor shaft (6).

2. The wind turbine drive train (7) according to the preceding claim, wherein the pretension means (42) are arranged between the support frame (16) and the gearbox support (31) and are configured to provide a pretension between the support frame (16) and the gearbox support (31) in the axial direction of the rotor shaft (6) , wherein the pretension is transmitted via a gearbox bearing (36) to the rotor shaft (6).

3. The wind turbine drive train (7) according to one of the preceding claims, wherein the drive train (7) is configured to receive adjustment means (46) to adjust the position of the gearbox support (31) relative to the support frame (16) in a direction perpendicular to the axial direction of the rotor shaft (6).

4. The wind turbine drive train (7) according to claim 3, wherein the pretension means (42) and the adjustment means (46) are configured to be controlled to reach a pretension state in which one of the rotor bearings (25,26), in particular the rotor rear bearing (26), is free of load.

5. The wind turbine drive train (7) according to one of the preceding claims, wherein the rotor shaft (6) is suited to be rotated by turning means(52) during the activation and deactivation of the pretension means (42) .

6. The wind turbine drive train (7) according to one of the preceding claims, wherein the drive train (7) further comprises adjustable axial fixation means (29) for the rotor front bearing ((25) and/or for the rotor rear bearing (26).

7. The wind turbine drive train (7) according to claim 6,
wherein the adjustable axial fixation means (29) include at least one of
- shims (40),
- a rotor shaft nut or a threaded ring,
- fluid channels in a rotor bearing housing (20) or in the rotor shaft (6) adapted to be pressurized,
- a preload ring,
- an axial displacement means or
- an adjusted bearing cover plate.

8. The wind turbine drive train (7) according to one of the previous claims, wherein the gearbox support (31) is connected to the support frame (16) during normal power production operation of the drive train (7).

9. The wind turbine drive train (7) according to one of the previous claims, wherein the rotor front bearing (25) and the rotor rear bearing (26) are mounted in a joint rotor bearing housing (20) and the rotor bearing housing (20) is attached to the support frame (16).

10. A wind turbine (1) comprising a wind turbine drive train (7) according to any of the preceding claims.

11. A method of reinstating a preload in a rotor bearing (25, 26) of a wind turbine drive train (7) comprising a rotor shaft (6) with a rotor front bearing (25), a rotor rear bearing (26) and a gearbox (8) connected to a rotor shaft (6), in particular according to one of the claims 1 to 9, comprising the steps of:
- providing pretension means (42) connected to a gearbox support (31),
- providing a pretension in an axial direction of the rotor shaft (6) by activating the pretension means (42),
- adjusting an axial fixation of one of the rotor bearings (25, 26), and
- relaxing the pretension by deactivating the pretension means (42).

12. The method of reinstating a preload according to the preceding claim, wherein the method comprises the additional steps of
- providing adjustment means (46) and
- adjusting the position of the gearbox support (31) in a direction perpendicular to the axial direction of the rotor shaft (6).

13. The method of reinstating a preload according to claim 12 comprising at least one of the additional steps of
- controlling the pretension means (42) and the adjustment means (46) to reach a pretension state in which one of the rotor bearings (25, 26), in particular the rotor rear bearing (26), is free of load, or
- checking that one of the rotor bearings (25, 26) is free of load before adjusting the axial fixation means (29) of the rotor bearing (25, 26).

14. The method of reinstating a preload according to any of the claims 11 to 13 comprising at least one of the additional steps of
- determining the actual rotor bearing preload before providing the pretension in the axial direction of the rotor shaft (6) by the pretension means (42) acting on the gearbox support (31),
- rotating the rotor shaft (6) during the step of providing the pretension or
- rotating the rotor shaft (6) during the step of releasing the pretension.

15. The method of reinstating a preload according to any of the claims 11 to 14 comprising at least one of the additional steps of
- providing a shim (40) for adjusting the axial fixation of the rotor bearing (25, 26) and replacing the shim (40) or changing the number of shims (40) for adjusting the axial fixation means (29) of the rotor bearing,
- providing a shaft nut or a threaded ring and adjusting the position of the shaft nut or the threaded ring for adjusting the axial fixation means (29) of the rotor bearing (25, 26),
- providing a preload ring in contact with a bearing ring (27, 28), and in particular providing axial displacement means acting on the preload ring for moving the bearing ring (27, 28) of the rotor bearing (25, 26)
- providing fluid channels in a rotor bearing housing (20) or in the rotor shaft (6) adapted to be pressurized to reduce friction in a press fit of the bearing ring (27, 28), or adjusting a bearing cover plate.
